# NEUE EUROPÄISCHE PATENTSCHRIFT

(11) **EP 1 557 601 B2**
(45) Veröffentlichungstag und Bekanntmachung des Hinweises auf die Entscheidung über den Einspruch: **08.09.2010**
(45) Hinweis auf die Patenterteilung: 14.06.2006
(21) Anmeldenummer: 04001432.6
(22) Anmeldetag: 23.01.2004
(51) Int. Cl.: F16L 53/00, E03B 7/12, F01M 13/00, H05B 3/58

(54) **Heizclip für eine Fluidleitung**
Heating clip for a fluid conduit
Clip de chauffage pour une conduite de fluide

(43) Veröffentlichungstag der Anmeldung: 27.07.2005
(73) Patentinhaber: DBK David + Baader GmbH, 76870 Kandel/Pfalz (DE)
(72) Erfinder: Gschwind, Thomas, Dipl.-Ing., 67098 Bad Dürkheim (DE); Keber, Thomas, 76872 Steinweiler (DE); Proner, Mathias, Dipl.-Ing., 76139 Karlsruhe/Baden (DE)
(74) Vertreter: Polte, Willi

(56) Entgegenhaltungen:
- EP-A- 0 262 243
- EP-A- 0 333 906
- EP-A- 1 375 999
- EP-A1- 0 582 428
- EP-A1- 1 375 997
- WO-A-03/001069
- DE-A1- 2 547 277
- DE-A1- 2 614 433
- DE-A1- 2 948 592
- DE-A1- 3 115 047
- DE-A1- 10 258 257
- DE-U- 8 705 746
- DE-U1- 29 712 340
- DE-U1- 810 342 9 6
- FR-A- 2 586 790
- US-A- 5 262 619

## Beschreibung

Die Erfindung betrifft einen Heizclip für eine Fluidleitung, der ein in einem Gehäuse angeordnetes Heizelement, und ein Klemmelement, durch das der Heizclip im Betrieb an die Fluidleitung klemmbar ist, und eine am Gehäuse angebrachte Wärmesenke umfasst, welche im Betriebszustand die Fluidleitung umschlingt und wärmeübertragend zwischen dem Heizelement und der Fluidleitung angeordnet ist.

Heizclipse der genannten Art sind aus dem Stand der Technik bekannt und werden eingesetzt, um ein in einer Fluidleitung strömendes, flüssiges oder gasförmiges Medium von außen zu erwärmen. Dies ist erforderlich, damit das Medium nicht einfriert oder damit im Medium gelöste Bestandteile nicht ausfällen, wenn die Fluidleitung in einer kalten Umgebung verläuft.

Heizclipse haben den Vorteil, dass sie einfach von außen an die Fluidleitung angeclipst werden können, ohne dass an der Fluidleitung spezielle Anpassungen vorgenommen werden müssen. Hierdurch sind sie leicht montierbar und können auch an bereits installierten Fluidleitungen ohne Spezialwerkzeug problemlos angebracht werden. Weiterhin lässt sich der Heizclip genauso leicht, wie er anbringbar ist, auch wieder entfernen oder versetzen. Hierdurch sind Heizclipse flexibel einsetzbar. Durch eine geringe Baugröße sind Heizclipse auch in beengten Räumen, wie z.B. einem Motorraum eines Kraftfahrzeugs, an dort befindlichen Fluidleitungen anbringbar.

Aus der japanischen Druckschrift JP 2001 220 776 ist beispielsweise eine Heizvorrichtung bekannt, die auf eine Wasserleitung aufsetzbar ist. Ein in einem Keramikgehäuse angeordnetes Heizelement wird dabei mit einer Klammer an der Wasserleitung angebracht.

Nachteilig bei der in der JP 2001 220 776 beschriebenen Heizvorrichtung ist die ungleichmäßige Erwärmung des Mediums in der Fluidleitung, was schlimmstenfalls zu einem Einfrieren des Mediums in der Fluidleitung führen kann und bei hohem Heizbedarf das Material der Fluidleitung thermisch stark belastet.

In der DE 87 05 746 U1 ist ebenfalls eine Heizvorrichtung für eine Rohrleitung beschrieben, bei der PTC-Heizelemente zwischen zwei Profilteilen angeordnet sind und die mit einer Spannschelle an der Rohrleitung befestigbar ist.

Die FR 2 586 790 A1 betrifft eine Vorwärmvorrichtung für ein Brennstoffrohr eines Heizungsbrenners, die einen Kunststoffhalter, ein Folienheizelement und eine Wärmesenke umfasst.

Weitere Heizkörper für eine Rohrleitung sind in der EP 0 262 243 A1 und der EP 0 333 906 A1 beschrieben. Bei diesen zueinander ähnlichen Heizkörpern sind PTC-Heizelemente zwischen einem Tragprofilkörper und einem Deckkörper angebracht.

Die Aufgabe der vorliegenden Erfindung ist es daher, einen Heizclip herzustellen, der ein Medium im Innern einer Fluidleitung gleichmäßiger erwärmt und das Material der Fluidleitung weniger stark belastet.

Diese Aufgabe wird erfindungsgemäß dadurch gelöst, dass das Heizelement in einem im Gehäuse ausgestalteten, abgedichteten Schacht vorgespannt eingeschoben ist.

Diese Lösung ist konstruktiv einfach. Der erfindungsgemäß ausgestaltete Heizclip erwärmt das Medium im Innern der Fluidleitung, auf die er aufgeclipst ist, gleichmäßiger. Aufgrund der gleichmäßigen Erwärmung sind geringere Heizleitungen notwendig, das Material der Fluidleitung wird lokal weniger stark erhitzt und dadurch geschont.

Durch die die Fluidleitung umschlingende Wärmesenke wird die effektive Heizfläche, mit welcher der erfindungsgemäße Heizclip Wärme an die Fluidleitung abgibt, im Vergleich zu den aus dem Stand der Technik bekannten Heizclipsen vergrößert. Insbesondere sind die aus der JP 2001 220 776 bekannten Lufttaschen vermieden. Durch diese Heizflächenvergrößerung wird ein größerer Bereich der Fluidleitung gleichzeitig erwärmt. Hierdurch wird eine größere Menge des Mediums in der Fluidleitung gleichzeitig erwärmt; was zu einer gleichmäßigeren Erwärmung des Mediums führt.

Um die Montage zu erleichtern, ist das Heizelement in einem im Gehäuse ausgestalteten Schacht eingeschoben.

Der solchermaßen verbesserte Heizclip kann durch verschiedene, voneinander unabhängige, jeweils für sich vorteilhafte Ausgestaltungen weiterentwickelt sein. Auf diese Ausgestaltungen und die mit den Ausgestaltungen jeweils verbundenen Vorteile wird im Folgenden kurz eingegangen.

Beispielsweise kann die Wärmesenke derart am Heizclip angeordnet sein, dass sie in dem Betriebszustand in unmittelbarer, vorzugsweise flächiger Anlage an die Fluidleitung kommt. Durch diese Maßnahme wird der Wärmeübergang vom Heizelement zum Medium deutlich verbessert.

So kann die Wärmesenke in einer vorteilhaften Ausgestaltung die Wärmesenke mehr als etwa die Hälfte, vorzugsweise etwa 230° des Umfangs der Fluidleitung umschlingend ausgebildet sein. Dies hat den Vorteil, dass der Heizclip leicht auf die Fluidleitung aufsteckbar ist und sich auf ihr selbstständig hält.

Um den Heizclip einfach und kostengünstig als Einheit vormontieren zu können, kann die Wärmesenke in einer vorteilhaften Weiterbildung mit dem Gehäuse im Wesentlichen formschlüssig verrastet sein. Auch eine kostengünstige, im Wesentlichen stoffschlüssige Verbindung wie Einkleben der Wärmesenke ist möglich. In diesem Fall sollte ein luftresistenter, gut wärmeleitender Klebstoff verwendet werden.

Ferner kann die Wärmeleitfähigkeit der Wärmesenke in einer vorteilhaften Weiterbildung größer als etwa 25 Watt pro Meter Kelvin (W/m·K) sein, um einen guten Wärmefluss zur Fluidleitung zu gewährleisten. Insbesondere kann die Wärmesenke aus einem wärmeleitenden Material, vorzugsweise Aluminium, hergestellt sein. Dies hat den Vorteil, dass die von dem Heizelement erzeugte Wärmeenergie sich besonders gut in der Wärmesenke verteilt und an die Fluidleitung abgegeben werden kann.

Bevorzugterweise umfasst der erfindungsgemäße Heizclip einen Verschlussbügel, durch den die Klemmwirkung des Heizclips verstärkt wird und der weiter unten näher beschrieben wird. In einer möglichen weiteren Ausgestaltung ist der Heizclip auf der Fluidleitung aufgrund der von der Wärmesenke selbst erzeugten Klemmwirkung gehalten. In diesem Fall ist die Wärmesenke im Betriebszustand elastisch geweitet. Ist die Wärmesenke aus einem elastisch auslenkbaren Werkstoff gefertigt, so kann die Wärmesenke einteilig ausgebildet sein und zwei zueinander elastisch auslenkbare, die Fluidleitung umschlingende Schenkel aufweisen. Falls die Wärmesenke alternativ aus einem starren, wenig elastischen Material gefertigt ist, kann in einer weiteren vorteilhaften Ausgestaltung die Wärmesenke auch zweiteilig ausgestaltet sein und die beiden Teile zueinander beweglich im Heizclip gehalten sein. Dies hat den Vorteil, dass die beiden Teile der Wärmesenke beim Montieren des Heizclips auf die Fluidleitung relativ zueinander bewegt werden können, um die Klemmung des Heizclips auf der Fluidleitung zu ermöglichen oder zu vereinfachen. Alternativ kann die Klemmwirkung auch durch eine elastische Verformung der Fluidleitung, die durch die aufgesteckte Wärmesenke zusammegedrückt ist, erzeugt werden.

In einer weiteren vorteilhaften Ausgestaltung kann das Heizelement ein PTC-Heizelement (positive temperature coefficient) umfassen. Ein PTC-Heizelement hat die Eigenschaft, nur bis zu einer vorbestimmten Grenztemperatur zu heizen. Ab dieser Grenztemperatur erhöht sich der elektrische Widerstand sprungartig, so dass sich das PTC-Element nicht weiter erwärmen kann. PTC-Heizelemente sind dadurch selbstregelnd und bedürfen keiner zusätzlichen Temperatursteuerung, wodurch der Heizclip unkompliziert einsetzbar ist und keine zusätzliche Steuerungseinheit benötigt.

Ferner kann das Heizelement in einer vorteilhaften Weiterbildung zwei Kontaktelemente und wenigstens ein dazwischenliegendes PTC-Element umfassen, wobei eines der Kontaktelemente als Federelement ausgestaltet sein kann. Dies hat den Vorteil, dass ein guter Kontakt und damit ein guter Wärmeübergang zwischen den Kontaktelementen und dem PTC-Element gewährleistet ist. Durch die zwei Kontaktelemente wird im Betrieb elektrische Energie durch das PTC-Element geleitet. Im eingebauten Zustand wird durch das Federelement eine Federkraft auf die Kontaktelemente und das zwischenliegende PTC-Element ausgeübt, die Oberflächenunterschiede bedingt durch Fertigungstoleranzen ausgleicht und einen guten Kontakt gewährleistet. Neben dem elektrischen Energiefluss wird durch einen guten Kontakt zwischen den Kontaktelementen und dem PTC-Element auch ein guter Wärmefluss gewährleistet. Da die im Betrieb des Heizclips erzeugte Wärmeenergie am PTC-Element entsteht und über die Kontaktelemente abfließt, ist dies besonders wichtig.

Die Kontaktelemente können im Wesentlichen plattenförmig ausgestaltet sein und eine Außenkontur aufweisen, die im Wesentlichen der Außenkontur des Heizelements entspricht. Weiterhin ist es möglich, die Kontaktelemente zu einem elektrischen Steckverbinder hin zu verlängern und jeweils eine Kontur anzuformen, so dass sie im montierten Zustand standardisierte Steckzungen des Steckverbinders ausbilden, die zur elektrischen Kontaktierung dienen. Damit wird der Anschluss an eine Energiequelle einfach und ohne zusätzliche Bauelemente möglich.

Um die Anzahl der zu montierenden Einzelteile des Heizclips gering zu halten und dadurch eine einfache und schnelle Montage des Heizclips zu gewährleisten, kann das Heizelement in einer vorteilhaften Ausgestaltung auch ein Widerstandsdraht-Heizelement ausgestaltet sein. Ein Widerstandsdraht erwärmt sich aufgrund seines elektrischen Widerstandes, sobald elektrische Energie durch ihn hindurchgeleitet wird. Widerstandsdraht-Heizelemente zeichnen sich durch ihre Robustheit und einen geringen Preis aus. Da sie im Wesentlichen nur aus dem Widerstandsdraht bestehen, sind sie einfach und damit kostengünstig zu montieren. Allerdings weisen Widerstandsdrähte einen hohen Energiebedarf auf und benötigen meist eine zusätzliche Steuereinheit zur Temperaturregelung.

Die Schachtbreite kann im Wesentlichen der Breite des Heizelementes entsprechen. Hierdurch ist das in den Schacht eingeschobene Heizelement fest in seiner vorbestimmten Position gehalten und muss nicht gesondert befestigt werden. Durch die schnelle Montage des Heizelementes in dem Gehäuse reduziert sich die Montagezeit und damit die Herstellungskosten des Heizclips. Ferner kann in dem Schacht wenigstens ein in Einschubrichtung des Heizelementes verlaufender Führungssteg angeordnet sein, der das Heizelement linear führt. Hierdurch wird das Einschieben des Heizelementes in den Schacht vereinfacht, da ein Verkanten oder Verkeilen des Heizelementes beim Einschieben in den Schacht vermieden wird.

Weiterhin kann sich der Schacht in einer weiteren vorteilhaften Ausgestaltung in Einschubrichtung des Heizelementes eine sich beispielsweise keilförmig verjüngende Anschlagfläche aufweisen, an der sich das Federelement im eingeschobenen Zustand abstützt. Hierdurch ist das Heizelement mit dem als Federelement ausgestalteten Kontaktelement leichter zu montieren, da sich das Federelement erst beim Einschieben in den Schacht spannt.

Sinnvollerweise sollte das Kontaktelement, das als Federelement ausgebildet ist, im montierten Zustand im Schacht des Gehäuses an der der Wärmesenke abgewandten Seite des Schachtes angeordnet sein. Damit wird die Nutzwärme gezielt in Richtung der Wärmesenke geleitet und Wärmeverluste werden verhindert. Das Übermaß des Schachtes liegt nämlich bei dieser Ausgestaltung auf der Seite des Federelements und bildet ein wärmeisolierendes Luftkissen, während auf der Seite der Wärmesenke das Kontaktelement fest gegen die Schachtwand oder die Wärmequelle gedrückt ist.

In einer weiteren vorteilhaften Ausgestaltung kann das Gehäuse aus einem elektrisch isolierenden Material, vorzugsweise einem Kunststoff, hergestellt sein. Dies hat den Vorteil, dass das im Gehäuse angeordnete elektrische Heizelement nach außen elektrisch isoliert ist. Hierdurch ist eine separate Isolierung des Heizelementes überflüssig, wodurch sich die Materialkosten des erfindungsgemäßen Heizclips reduzieren. Vorzugsweise weist das Material des Gehäuses eine geringe Wärmeleitfähigkeit auf, um Wärmeverluste zu vermeiden und den Wärmestrom über die Wärmesenke zum Medium zu konzentrieren.

In einer weiteren vorteilhaften Ausgestaltung kann der Heizclip einen Verschlussbügel umfassen, mit dem der Heizclip den im Wesentlichen ganzen Umfang der Fluidleitung umschließbar ausgestaltet ist. Im Betriebszustand, bei auf die Fluidleitung gesetztem Heizclip, kann der Verschlussbügel elastisch verformt sein, um eine Anpresskraft zu erzeugen, mit der die Wärmesenke gegen die Fluidleitung gedrückt ist. Diese Maßnahme hat ferner den Vorteil, dass der an der Fluidleitung angebrachte Heizclip die Fluidleitung an ihrem ganzen Umfang umschließen und dadurch nicht umgewollt von der Fluidleitung abrutschen kann. Der Verschlussbügel kann bezüglich der Fluidleitung gegenüber dem Heizelement angeordnet sein, damit die Anpresskraft optimal auf die Wärmesenke wirkt.

Weiterhin können der Verschlussbügel und der Gehäuse in einer vorteilhaften Weiterbildung als ein Teil vorgefertigt sein. Dies hat den Vorteil, dass die Anzahl der zu produzierenden Einzelteile des Heizclips reduziert wird und der Verschlussbügel und das Gehäuse unverlierbar als Einheit an den Montageort transportiert werden können. Durch eine geringe Anzahl von Fertigungsteilen werden die Fertigungskosten und auch die Montagekosten des Heizclips reduziert. Um die Fertigungskosten des Heizclips bei großer Produktionsmenge weiter zu reduzieren, können das Gehäuse und der Verschlussbügel als ein Spritzgussteil ausgestaltet sein. Das Spritzgussverfahren, insbesondere das Kunststoffspritzgussverfahren, ist zur Herstellung von Einzelteilen in großen Stückzahlen besonders kostengünstig.

Um eine komfortable Montage bzw. Demontage des Heizclips an der Fluidleitung zu gewährleisten, können der Verschlussbügel und das Gehäuse unverlierbar miteinander verbunden sein. Hierdurch wird verhindert, dass sich der Verschlussbügel während der Montage oder der Demontage des Heizclips an der Fluidleitung von dem Gehäuse löst.

In einer weiteren vorteilhaften Ausgestaltung können der Verschlussbügel und der Gehäuse zusammen ein Schwenklager ausbilden. Dies hat den Vorteil, dass keine zusätzlichen Einzelteile nötig sind, um den Verschlussbügel mit dem Gehäuse scharnierartig zu verbinden.

Ferner können der Verschlussbügel und das Gehäuse formschlüssig miteinander verrastbar ausgestaltet sein. Dies ist besonders vorteilhaft, da hierdurch der erfindungsgemäße Heizclip schnell und einfach an der Fluidleitung montiert werden kann. Weiterhin können der Verschlussbügel und das Gehäuse wiederholt lösbar miteinander verrastbar ausgestaltet sein, um eine Demontage des Heizclips von der Fluidleitung zu erleichtern.

Um eine axiale Verschiebesicherung zwischen dem Verschlussbügel und dem Gehäuse im montierten Zustand zu erzielen, können der Verschlussbügel und/oder das Gehäuse in Längsrichtung der Fluidleitung zusammenwirkende Anschläge aufweisen.

In einer vorteilhaften Ausgestaltung kann der Heizclip ein Steckergehäuse umfassen, das zusammen mit den Kontaktelementen im Heizelement einen, vorzugsweise standardisierten, Stecker ausbildet, mit dem der Heizclip an die Energiequelle anschließbar ausgestaltet ist. Dies hat den Vorteil, dass der Heizclip einfach und schnell an die Energiequelle angeschlossen oder von ihr getrennt werden kann.

Ferner kann das Steckergehäuse mit dem Gehäuse formschlüssig verrastet sein, um eine einfache Montage des Steckergehäuses mit dem Gehäuse zu gewährleisten. Die Rastverbindung kann weiterhin wiederholt lösbar ausgestaltet sein, damit der Heizclip, beispielsweise bei einer Reparatur, demontiert werden kann. Ferner kann das Heizelement in einer weiteren vorteilhaften Ausgestaltung an dem Steckergehäuse angebracht sein, wodurch das Heizelement zusammen mit dem Steckergehäuse an dem Gehäuse montiert wird und dadurch eine besonders schnelle Montage des Heizclips möglich ist.

In einer weiteren vorteilhaften Ausgestaltung kann zwischen Steckergehäuse und Gehäuse eine Dichtung angeordnet sein. Diese dichtet den im Gehäuse ausgebildeten Schacht, in dem das Heizelement eingeschoben wird, gegen betriebsnormale Umwelteinflüsse wie Spritzwasser und Staub ab. Beispielsweise kann ein Dichtring zwischen Steckergehäuse und Gehäuse eingelegt sein.

Im Folgenden wird die Erfindung beispielhaft anhand von verschiedenen Ausführungsformen mit Bezug auf die beigefügten Zeichnungen erläutert. Die bei den verschiedenen Ausführungsformen unterschiedlichen Merkmale können dabei unabhängig voneinander kombiniert oder auch weggelassen werden, wie dies oben bei den einzelnen vorteilhaften Ausgestaltungen bereits dargelegt wurde. Bei den im Folgenden beschriebenen unterschiedlichen Ausführungsformen des erfindungsgemäßen Heizclips sind gleiche Elemente mit den gleichen Bezugsziffem gekennzeichnet.

Es zeigen:
- Fig. 1: eine Ausführungsform des erfindungsgemäßen Heizclips schematisch in einer perspektivischen Explosionsdarstellung;
- Fig.2: die Ausführungsform der Fig. 1 schematisch in einer perspektivischen Darstellung an einer Fluidleitung mit geöffnetem Verschlussbügel;
- Fig. 3: die Ausführungsform der Fig. 1 schematisch in einer perspektivischen Ansicht in einem Betriebszustand mit geschlossenem Verschlussbügel;
- Fig. 4: eine weitere Ausführungsform des erfindungsgemäßen Heizclips schematisch in einer perspektivischen Ansicht.

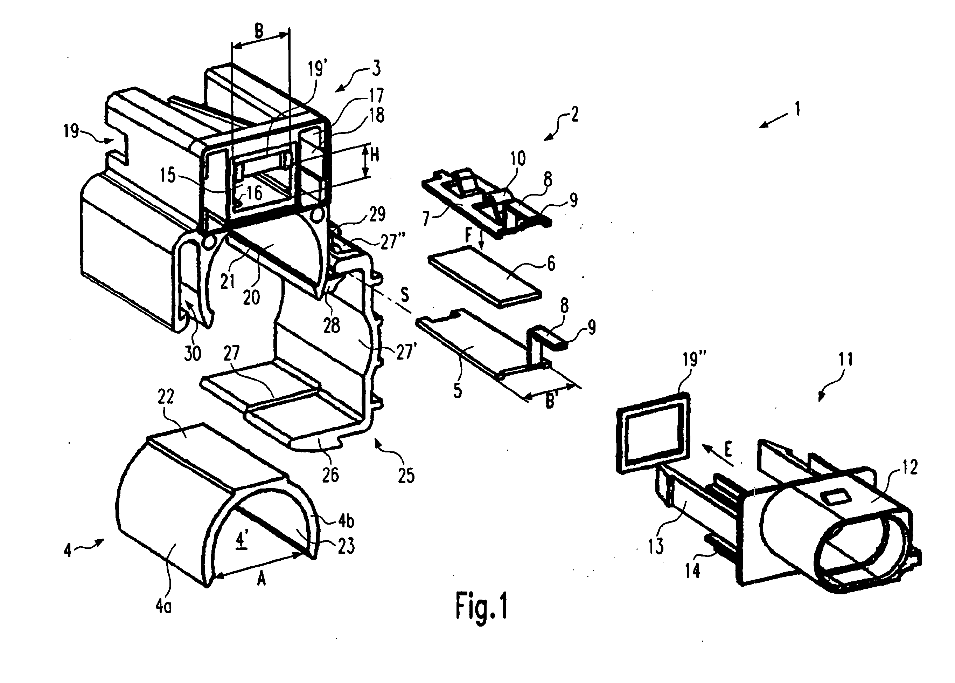

Zunächst wird der allgemeine Aufbau eines erfindungsgemäßen Heizclips mit Bezug auf die Fig. 1 bis 3 beschrieben.

Fig. 1 zeigt schematisch eine Ausführungsform eines erfindungsgemäßen Heizclips 1, der ein Heizelement 2, ein Gehäuse 3 und eine Wärmesenke 4 umfasst.

Das Heizelement 2 ist beispielsweise als PTC-Heizelement stapelförmig mit einem unteren Kontaktelement 5, einem darüberliegenden PTC-Element 6 und obenauf mit einem oberen Kontaktelement 7 aufgebaut.

Bei der in Fig. 1 beispielhaft dargestellten Ausführungsform des erfindungsgemäßen Heizclips 1 fließt im Betrieb eine elektrische Energie über die beiden Kontaktelemente 5, 7 durch das PTC-Element 6 hindurch. Das PTC-Element 6 ist als beispielsweise rechteckige, dünne Platte ausgebildet. Die erzeugte Wärmeenergie kann über die obere und untere Plattenfläche des PTC-Elements 6 besonders gut abgegeben werden. Das untere Kontaktelement 5 und das obere Kontaktelement 7 sind als Platten ausgestaltet, deren Außenkontur im Wesentlichen der Außenkontur des PTC-Elements entspricht. Bei der Ausführungsform der Fig. 1 sind die Kontaktelemente 5, 7 rechteckig. Hierdurch kann einerseits die elektrische Energie besonders gut von den Kontaktelementen 5, 7 durch das PTC-Element 6, andererseits auch die von dem PTC-Element 6 erzeugte Wärmeenergie durch das untere und das obere Kontaktelement 5, 7 geleitet werden.

An dem unteren Kontaktelement 5 und dem oberen Kontaktelement 7 sind jeweils gekröpfte Steckzungen 8 ausgestaltet. Über die Steckzungen 8 kann im Betrieb des erfindungsgemäßen Heizclips 1 die elektrische Energie in die Kontaktelemente 5, 7 eingeleitet werden. Die Anordnung der Steckzungen 8 an den Kontaktelementen 5, 7 und ihre Form ist so ausgestaltet, dass ihre Enden 9 bei dem montierten Heizelement 2 nebeneinander liegen.

Weiterhin ist das obere Kontaktelement 7 als Federelement mit herausgebogenen Federzungen 10 ausgebildet. Das in dem Heizclip 1 eingebaute Heizelement 2 wird mit einer durch die Federzungen 10 erzeugten Federkraft F zusammengedrückt. Hierdurch wird ein guter Kontakt zwischen dem PTC-Element 6 und den Kontaktelementen 5, 7 gewährleistet. Durch den guten Kontakt wird sowohl der elektrische Fluss als auch der Wärmeübergang zwischen dem PTC-Element 6 und den Kontaktelementen 5, 7 erhöht.

Das Heizelement 2 ist mit den Steckzungen 8 an einem Steckergehäuse 11 angebracht, das einen Stecker 12, Raststege 13 und Führungsstifte 14 umfasst. Das Steckergehäuse 11 ist in einem im Gehäuse 3 ausgebildeten Schacht 15 angeordnet.

Der Stecker 12 ist in einen Gegenstecker (nicht dargestellt) einsteckbar, wodurch die Steckzungen 8 mit einer Energiequelle (nicht dargestellt) verbunden werden können. Die Steckzungen 8 erstrecken sich bei dem montierten Heizclip 1 in den Stecker 12 und bilden dadurch die Steckerkontakte. Gleichzeitig können das Paket aus PTC-Element 6 und Kontaktelementen 5, 7 durch die Steckzungen 8 für die Montage gehalten werden. In Fig. 1 ist der Stecker 12 als ein standardisierter Stecker dargestellt. Jede andere Steckerform ist aber ebenfalls möglich.

Um das Steckergehäuse mit dem daran angebrachten Heizelement 2 bei der Montage des Heizclips 1 gut in das Gehäuse 3 bzw. den Schacht 15 einstecken zu können, sind an dem Steckergehäuse 11 Raststege 13 und Führungsstifte 14 ausgebildet. Außerdem wird das Steckergehäuse 11 mit den Raststegen 13 an dem Gehäuse 3 befestigt.

Wenn das Heizelement 2 bei der Montage des Heizclips 1 in den Schacht 15 eingeschoben wird, wird es durch zwei an gegenüberliegenden Schachtwänden angeordnete Führungsstege 16 linear geführt. Hierdurch kann das Heizelement 2 nicht verkanten und ist leicht einschiebbar. Die beiden Führungsstege 16 sind dabei so in dem Schacht 15 angeordnet, dass die beiden Kontaktelemente 5, 7 dabei oberhalb bzw. unterhalb der beiden Führungsstege 16 angeordnet sind. Die Bereite B des Schachts 15 entspricht im Wesentlichen der Breite B' der Kontaktelemente 5, 7. Hierdurch wird ein seitliches Verschieben des Heizelementes 2 innerhalb des Schachtes 15 verhindert. Die Schachthöhe H ist so bemessen, dass die im Schacht 15 angeordneten Federzungen 10 des Heizelements 2 sich an der oberen Schachtwand abstützen und das Heizelement dadurch vorgespannt ist. Die Höhe H des Schachtes 15 verringert sich in Einschubrichtung E des Heizelementes 2, wodurch ein leichtes Einschieben in den Schacht 15 gewährleistet ist, da die Federzungen 10 erst beim Einschieben vorgespannt werden. Um das eingesteckte Heizelement 2 nach außen elektrisch zu isolieren, ist das Gehäuse 3 aus einem elektrisch isolierendem Kunststoff hergestellt.

Beidseitig des Schachtes 15 sind in dem Gehäuse 3 zwei Hohlräume 17 angeordnet. An der jeweils dem Schacht 15 gegenüberliegenden Seite der Hohlräume 17 ist jeweils eine Führungsnut 18 ausgebildet, die längs der Einsteckrichtung E verläuft. Am Ende der Führungsnut 18, in Richtung der Einsteckrichtung E, befindet sich in der Wand des Gehäuses 3 eine Freimachung 19.

Um den Schacht 15 ist eine Fläche 19' angeordnet, in die eine Dichtung 19" gefügt wird. Die Gegenfläche zur Dichtung 19" ist am Steckergehäuse 11 angebracht (nicht dargestellt). Die Dichtung 19" kann auch stoffschlüssig am Steckergehäuse 11 oder am Gehäuse 3 angebracht sein.

Bei der Montage des erfindungsgemäßen Heizclips 1 werden die Raststege 13 in den Führungsnuten 18 und die Führungsstifte 14 in den Ecken der Hohlräume 17 geführt, wenn das Steckergehäuse 11 in der Einsteckrichtung E in das Gehäuse 3 eingeschoben wird. Das Steckergehäuse 11 verrastet mit seinen Rastmitteln am Ende der Raststege 13 in der Freimachung 19 des Gehäuses 3 und ist dadurch formschlüssig befestigt. Die Dichtung 19" dichtet den Schacht 15 gegen das Steckergehäuse 11 gegen Staub und Spritzwasser ab.

Bei der in Fig. 1 beispielhaft dargestellten Ausführungsform des erfindungsgemäßen Heizclips 1 ist an dem Gehäuse 3 unterhalb des Heizelementes 2 eine Wärmesenke 4 an dem Gehäuse 3 in einer gabelförmigen Aufnahme 20 angeordnet. Die Wärmesenke 4 ist durch eine Schachtwand vom Heizelement getrennt. Die Schachtwand kann jedoch auch entfallen, so dass das Heizelement direkt an der Wärmesenke 4 aufliegt. An den Enden der Aufnahme 20 ist jeweils ein geradliniger Absatz 21 entlang der Einschubrichtung E ausgebildet.

Die Aufnahme 20 in dem Gehäuse 3 ist in ihrer Form der Außenkontur der Wärmesenke 4 angepasst. Hierdurch sitzt die Wärmesenke 4 lückenlos in der Aufnahme 20. Beim Zusammenbau des erfindungsgemäßen Heizclips 1 wird die Wärmesenke 4 in der Einsteckrichtung E in die Aufnahme 20 eingesteckt und durch die Absätze 21 gerade geführt. Um ein Herausrutschen entlang oder entgegen der Einschubrichtung E der Wärmesenke 4 aus der Aufnahme 20 zu verhindern, kann die Wärmesenke 4 mit Hilfe von geeigneten Rasten (nicht dargestellt) oder durch einen Klebstoff an dem Gehäuse 3 gehalten werden.

Bei der in Fig. 1 dargestellten beispielhaften Ausführungsform des Heizclips 1 ist die Wärmesenke 4 als Rinne mit einer im Wesentlichen kreisförmigen oder runden Außenkontur und rechteckförmigen Wärmeaufnahmefläche 22 ausgebildet.

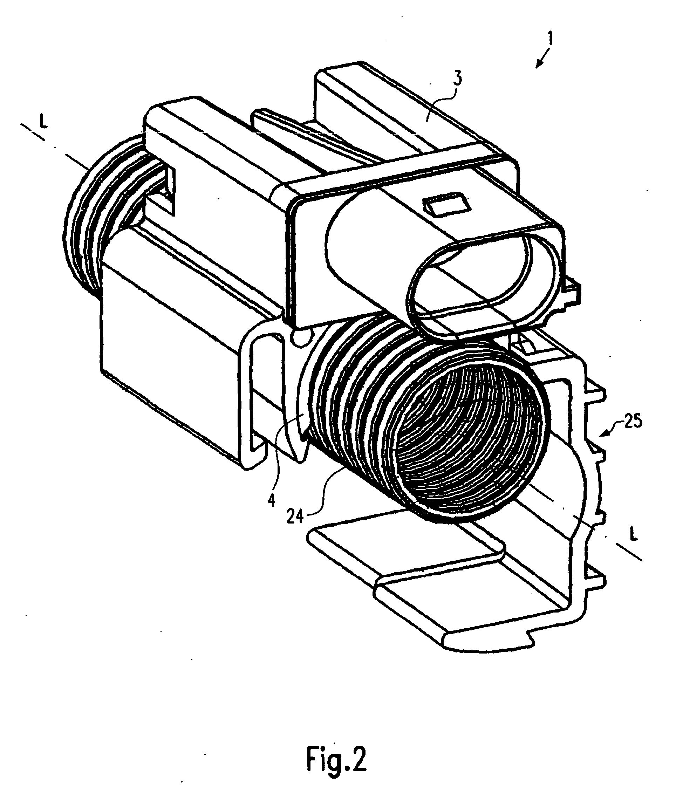

Die Wärmesenke 4 nimmt die von dem Heizelement 2 erzeugte Wärmeenergie mit der Wärmeaufnahmefläche 22 auf. Die rechteckförmige Wärmeaufnahmefläche 22 ist im Wesentlichen flächengleich mit der Fläche des unteren Kontaktelementes 5, das die Wärmeenergie in Richtung der Wärmesenke 4 abgibt. Hierdurch wird im Betrieb des Heizclips 1 ein guter Wärmefluss von dem Heizelement 2 zu der Wärmesenke 4 gewährleistet. Die Wärmeenergie wird von der Wärmesenke 4 aufgenommen und über eine Heizfläche 23 an eine Fluidleitung 24, wie in Fig. 2 dargestellt, abgegeben.

Um die Wärmeenergie besonders gut übertragen zu können, ist die Wärmesenke 4 aus einem Material mit einer Wärmeleitfähigkeit von mindestens 25 W/ m·K hergestellt. Vorzugsweise ist die Wärmesenke 4 jedoch aus einem Material mit einer Wärmeleitfähigkeit von mehr als 150 W/ m-K, wie z.B. Aluminium, hergestellt.

Der Wärmeaufnahmefläche 22 gegenüberliegend bilden die Schenkel 4a, 4b der Wärmesenke 4 eine Einschuböffnung 4', durch die eine Fluidleitung in dem Raum zwischen den Schenkeln 4a, 4b eingesetzt werden kann, so dass sie an der Heizfläche 23 anliegt. Die lichte Weite A der Einschuböffnung ist kleiner als der Durchmesser der Fluidleitung 24.

Die Heizfläche 23, welche die Innenkontur der Wärmesenke 4 darstellt, ist der Außenkontur der Fluidleitung 24 nachgebildet. Hierdurch wird ein formschlüssiger Kontakt zwischen der Wärmesenke 4 und der Fluidleitung 24 gewährleistet. Weiterhin ist die Wärmesenke 4 so ausgebildet, dass sie mehr als die Hälfte, vorzugsweise etwa 230°, des Umfangs der Fluidleitung 24 umschlingt. Hierdurch ist der erfindungsgemäße Heizclip 1 auf die Fluidleitung 24 aufsteckbar und durch die umschlingende Heizfläche 23 wird ein Medium im Inneren der Fluidleitung gleichmäßig erwärmt. Beim Aufstecken des Heizclips 1 auf die Fluidleitung 24 vergrößert sich die lichte Weite A zwischen den Schenkeln 4a, 4b der Wärmesenke 4 bis die lichte Weite A dem Durchmesser der Fluidleitung 24 im Wesentlichen gleicht. Dabei werden die Wärmesenke 4 und die Aufnahme 20 elastisch in eine Montagestellung verformt. Bei aufgestecktem Heizclip 1 haben die Wärmesenke und die Aufnahme 20 ihren Betriebszustand eingenommen, in dem sie elastisch durch die Fluidleitung geweitet sind, da der Druchmesser der Fluidleitung größer ist als die lichte Weite A der Heizfläche.

An dem Gehäuse 3 ist ferner ein C-förmiger Verschlussbügel 25 angeordnet. Der Verschlussbügel 25 ist an einer Seite mit einer keilförmigen Raste 26 ausgestaltet, die in der Mitte einen Absatz 27 aufweist. Ferner ist in der Mitte des Verschlussbügels 25 eine kreissegmentförmige Senke 27' ausgebildet. Der Raste 26 gegenüberliegend ist eine rechteckförmige Öffnung 27" an dem Verschlussbügel 25 ausgestaltet.

Der Verschlussbügel 25 ist formschlüssig mit dem Gehäuse 3 verbunden. Hierbei ist der Verschlussbügel 25 mit seiner Öffnung 27" in einen Winkel 28, der an dem Gehäuse 3 ausgebildet ist, eingehakt. Durch einen am Gehäuse 3 angeformten Steg 29 wird verhindert, dass der Verschlussbügel 25 sich von dem Winkel 28 ablösen kann. Hierdurch ist der Verschlussbügel 25 unverlierbar an dem Gehäuse 3 angeordnet. Das Gehäuse 3 und der Verschlussbügel 25 bilden zusammen ein Schwenklager mit einer Schwenkachse S, die parallel zur Längsachse L der Fluidleitung verläuft. Hierdurch ist der Verschlussbügel um die Schwenkachse S drehbar.

Bei der in Fig. 1 dargestellten beispielhaften Ausführungsform des erfindungsgemäßen Heizclips 1 sind das Gehäuse 3 und der Verschlussbügel 25 als ein Teil, insbesondere als Kunststoffspritzgussteil, gefestigt. Dabei ist das Gehäuse 3 mit dem Verschlussbügel 25 durch kleine Stege an dem Winkel 28 verbunden. Wenn der Verschlussbügel 25 bei der Montage an der Fluidleitung 24 um die Schwenkachse S gedreht wird, brechen die formschlüssigen Stege, die als Sollbruchstelle ausgestaltet sind, und der Verschlussbügel 25 ist von dem Gehäuse 3 getrennt. Hierdurch können das Gehäuse 3 und der Verschlussbügel 25 als ein Fertigungsteil im Spritzgussverfahren hergestellt werden.

Mit der Raste 26 kann der Verschlussbügel 25 in eine an dem Gehäuse 3 ausgeformten Gegenraste 30 formschlüssig eingerastet werden. Hierdurch wird der Heizclip 1 unverlierbar an der Fluidleitung 24 befestigt. Um einen formschlüssigen Sitz des geschlossenen Heizclips an der Fluidleitung 24 zu gewährleisten, ist an dem Verschlussbügel 25 die Senke 27' ausgebildet. Die kreissegmentförmige Senke 27' hat dabei in etwa den gleichen Radius wie die Fluidleitung 24. Um den Reibschluss zwischen dem montierten Heizclip 1 und der Fluidleitung 24 zu erhöhen, ist der geschlossene Verschlussbügel durch die Fluidleitung elastisch verformt, wodurch eine Vorspannkraft erzeugt wird. Dies wird dadurch erreicht, dass bei geschlossenem Bügel die lichte Weite A des von ihm und der Heizfläche umschlossenen Kamms kleiner ist als der Durchmesser der Fluidleitung.

Durch den Anschlag 27, der an der Raste 26 des Verschlussbügels 25 ausgebildet ist, ist der Verschlussbügel 25 in Längsrichtung L in der Gegenraste 30 verschiebegesichert. Hierfür ist in der Gegenraste 30 ein Gegenanschlag (nicht dargestellt) zu dem Anschlag 27 ausgebildet, an dem der Anschlag 27 bei geschlossenem Bügel anliegt.

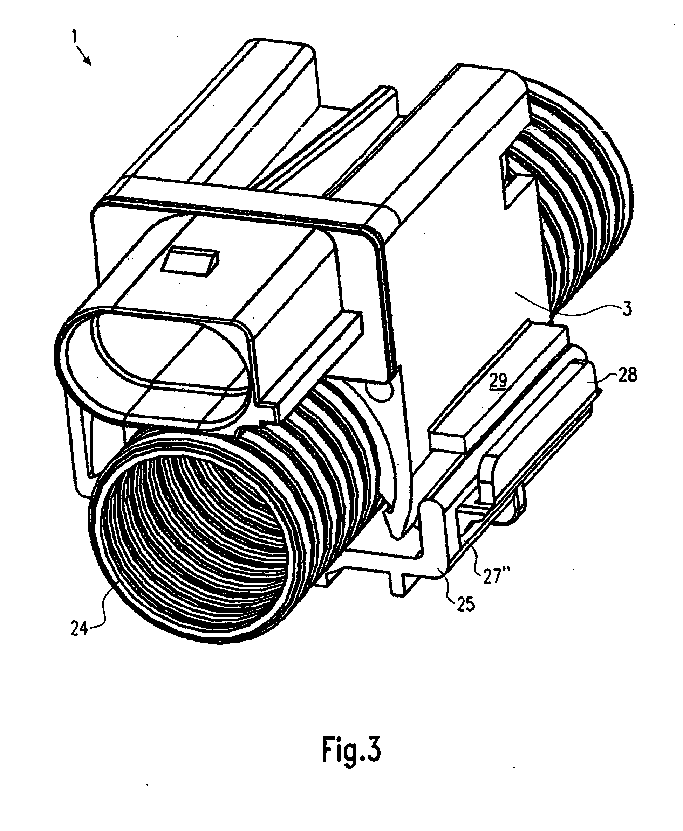

In Fig. 3 ist die beispielhafte Ausführungsform des erfindungsgemäßen Heizclips 1 der Fig. 1 an einer Fluidleitung 24 schematisch im Betriebszustand dargestellt. Der Verschlussbügel 25 ist dabei zur Befestigung des Heizclips 1 in dem Gehäuse 3 eingerastet.

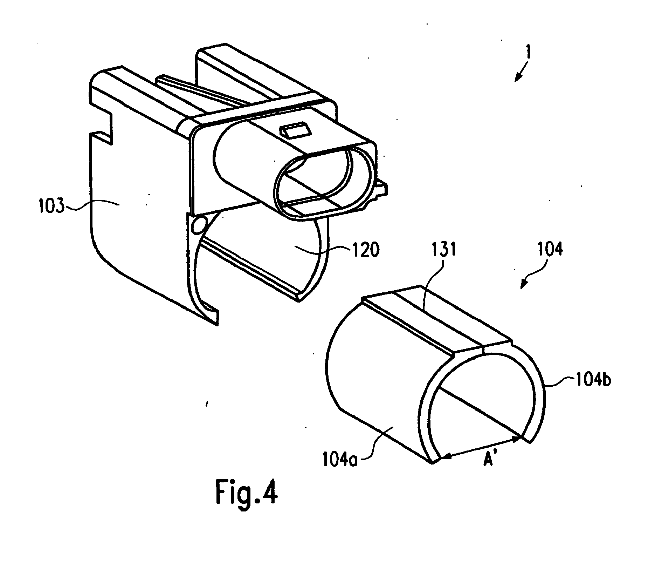

In Fig. 4 ist eine weitere Ausführungsform des erfindungsgemäßen Heizclips 1 schematisch dargestellt. Auf die Unterschiede zu der in den Fig. 1 bis 3 dargestellten Ausführungsform wird im Folgenden eingegangen:

Im Gegensatz zu der in den Fig. 1 bis 3 dargestellten Ausführungsform hat die Ausführungsform der Fig. 4 keinen Verschlussbügel 25. Der Heizclip 1 in Fig. 4 umfasst eine Wärmesenke 104, die aus zwei symmetrischen Teilen 104a und 104b besteht. Die beiden Teile 104a, 104b stoßen an einer Naht 131 zusammen. Die Wärmesenke 104 der Ausführungsform in Fig. 4 umschlingt den Umfang der Fluidleitung 24 weiter als die in den Fig. 1 bis 3 dargestellte Ausführungsform. Ferner ist die lichte Weite A' der Wärmesenke 104 im Betriebszustand des Heizclips 1 kleiner als bei der Ausführungsform aus den Fig. 1 bis 3, so dass die Klemmwirkung erhöht ist.

Die Aufnahme 120, in der die Wärmesenke 104 an dem Gehäuse angebracht ist, ist der Außenkontur der Wärmesenke 104 angepasst und nimmt sie in gleicher Weise auf, wie dies oben bei den Fig. 1 bis 3 beschrieben wurde.

Während der in Fig. 4 beispielhaft dargestellte Heizclip 1 auf eine Fluidleitung 24 aufgesteckt wird, vergrößert sich die lichte Weite A' zwischen den beiden Schenkeln 104a, 104b der Wärmesenke 104 im Wesentlichen bis auf den Durchmesser der

Fluidleitung 24. Dabei verformt sich die Aufnahme 120 der Wärmesenke 104 elastisch und die beiden Schenkel 104a, 104b bewegen sich zueinander entlang der Naht 131. Beim weiteren Aufschieben des Heizclips 1 auf die Fluidleitung 24 verkleinert sich die lichte Weite A' bis zum Betriebszustand des Heizclips 1, in der die Fluidleitung 24 in der Wärmesenke 104 komplett aufgenommen ist. Die elastisch verformte Aufnahme 120 erzeugt in der Montagestellung eine Vorspannkraft, die den Heizclip 1 in seinen Betriebszustand zurückführt. Das Gehäuse 103 ist bei der in Fig. 4 beispielhaft dargestellten Ausführungsform aus einem elastischen Kunststoff hergestellt, der die elastische Verformung der Aufnahme 120 während der Montage des Heizclips 1 ermöglicht.

Alternativ zu einer zweigeteilten Wärmesenke 104 kann auch eine Wärmesenke 104 aus einem elastischen Material verwendet werden.

Die in den Fig. 1 bis 4 dargestellten Ausführungsformen des erfindungsgemäßen Heizclips können für den Betrieb an einer anderen Fluidleitung mit einem anderen Außendurchmesser leicht umgerüstet werden. Hierfür muss eine der Außenkontur der Fluidleitung angepasste Wärmesenke 4, 104 in die Aufnahme 20, 120 eingesetzt werden. Dies Baukastensystem ist vorteilhaft, weil dadurch für unterschiedliche Fluidleitungen außer der Wärmesenke der gleiche Heizclip 1 verwendbar ist.

Im Übrigen kann der Heizclip 1 für beliebige Formen von Fluidleitungs-Querschnitten verwendet werden, indem einfach die Kontur der Heizfläche und des Verschlussbügels an die Kontur der Fluidleitung angepasst werden.

## Patentansprüche

1. Heizclip (1) für eine Fluidleitung (24), der ein in einem Gehäuse (3, 103) angeordnetes Heizelement (2), und ein Klemmelement, durch das der Heizclip im Betrieb an die Fluidleitung (24) klemmbar ist, und eine am Gehäuse (3, 103) angebrachte Wärmesenke (4, 104) umfasst, welche im Betriebszustand die Fluidleitung (24) umschlingt und wärmeübertragend zwischen dem Heizelement (2) und der Fluidleitung (24) angeordnet ist, **dadurch gekennzeichnet, dass** das Heizelement (2) in einen im Gehäuse (3, 103) ausgestalteten, abgedichteten Schacht (15) eingeschoben und im Schacht vorgespannt ist.

2. Heizclip (1) nach Anspruch 1, **dadurch gekennzeichnet, dass** die Wärmesenke (4, 104) mehr als etwa die Hälfte des Umfangs der Fluidleitung (24) umschlingend ausgebildet ist.

3. Heizclip (1) nach einem der oben genannten Ansprüche, **dadurch gekennzeichnet, dass** die Wärmesenke (4, 104) mit dem Gehäuse (3, 103) formschlüssig verrastet ist.

4. Heizclip (1) nach einem der oben genannten Ansprüche, **dadurch gekennzeichnet, dass** die Wärmeleitfähigkeit der Wärmesenke (4, 104) größer als etwa 25 W/mK ist.

5. Heizclip (1) nach einem der oben genannten Ansprüche, **dadurch gekennzeichnet, dass** die Wärmesenke (4, 104) aus Aluminium hergestellt ist.

6. Heizclip (1) nach einem der oben genannten Ansprüche, **dadurch gekennzeichnet, dass** die Wärmesenke einteilig (4) oder zweiteilig (104) ausgestaltet ist.

7. Heizclip (1) nach einem der oben genannten Ansprüche, **dadurch gekennzeichnet, dass** das Heizelement (2) ein PTC-Heizelement umfasst.

8. Heizclip (1) nach Anspruch 7, **dadurch gekennzeichnet, dass** das Heizelement zwei Kontaktelemente (5, 7) umfasst, wobei eines der Kontaktelemente (5, 7) als ein Federelement ausgestaltet ist und das PTC-Element (6) zwischen den Kontaktelementen (5, 7) angeordnet ist.

9. Heizclip (1) nach Anspruch 8, **dadurch gekennzeichnet, dass** ein Anschlag vorgesehen ist, an dem sich das Federelement vorgespannt abstützt.

10. Heizclip (1) nach einem der oben genannten Ansprüche, **dadurch gekennzeichnet, dass** das Heizelement (2) ein Widerstandsdraht-Heizelement umfasst.

11. Heizclip (1) nach einem der oben genannten Ansprüche, **dadurch gekennzeichnet, dass** in dem Schacht (15) wenigstens ein in Einschubrichtung E des Heizelementes (2) verlaufender Führungssteg (16) angeordnet ist, durch den das Heizelement (1) beim Einschieben geführt ist.

12. Heizclip (1) nach einem der oben genannten Ansprüche, **dadurch gekennzeichnet, dass** sich der Schacht (15) in Einschubrichtung E des Heizelementes (2) keilförmig verjüngt.

13. Heizclip (1) nach einem der oben genannten Ansprüche, **dadurch gekennzeichnet, dass** das Gehäuse (3, 103) aus einem elektrisch isolierenden Material, vorzugsweise einem Kunststoff, hergestellt ist. 1

14. Heizclip (1) nach einem der oben genannten Ansprüche, **dadurch gekennzeichnet, dass** der Heizclip (1) einen Verschlussbügel (25) umfasst, mit dem der Heizclip (1) den im Wesentlichen ganzen Umfang der Fluidleitung (24) umschließbar ausgestaltet ist.

15. Heizclip (1) nach Anspruch 14, **dadurch gekennzeichnet, dass** der Verschlussbügel (25) und das Gehäuse (3) als ein Teil vorgefertigt sind.

16. Heizclip (1) nach Anspruch 14 oder 15, **dadurch gekennzeichnet, dass** das Gehäuse (3) und der Verschlussbügel (25) als ein zusammenhängendes Spritzgussteil ausgestaltet sind.

17. Heizclip (1) nach einem der Ansprüche 14 bis 16, **dadurch gekennzeichnet, dass** der Verschlussbügel (25) und das Gehäuse (3) unverlierbar miteinander verbunden sind.

18. Heizclip (1) nach einem der Ansprüche 14 bis 17, **dadurch gekennzeichnet, dass** der Verschlussbügel (25) und das Gehäuse (3) zusammen ein Schwenklager ausbilden.

19. Heizclip (1) nach einem der Ansprüche 14 bis 18, **dadurch gekennzeichnet, dass** der Verschlussbügel (25) und das Gehäuse (3) formschlüssig miteinander verrastet sind.

20. Heizclip (1) nach einem der Ansprüche 14 bis 19, **dadurch gekennzeichnet, dass** der Verschlussbügel (25) und das Gehäuse (3) wiederholt lösbar miteinander verrastet sind.

21. Heizclip (1) nach einem der Ansprüche 14 bis 20, **dadurch gekennzeichnet, dass** der Verschlussbügel (25) und/oder das Gehäuse (3) in Längsrichtung L der Fluidleitung (24) wenigstens einen Anschlag (27) aufweisen.

22. Heizclip (1) nach einem der oben genannten Ansprüche, **dadurch gekennzeichnet, dass** der Heizclip (1) ein Steckergehäuse (11) umfasst, das zusammen mit dem Heizelement (2) einen elektrischen Steckverbinder ausbildet, durch den der Heizclip (1) an eine Energiequelle anschließbar ausgestaltet ist.

23. Heizclip (1) nach Anspruch 22, **dadurch gekennzeichnet, dass** das Steckergehäuse (11) mit dem Gehäuse (3, 103) formschlüssig verrastet ist.

24. Heizclip (1) nach Anspruch 22 oder 23, **dadurch gekennzeichnet, dass** das Heizelement (2) an dem Steckergehäuse (11) angebracht ist.

25. Heizclip (1) nach einem der Ansprüche 22 bis 24, **dadurch gekennzeichnet, dass** der Heizclip (1) eine Dichtung (19") umfasst, die zwischen dem Gehäuse (3) und dem Steckergehäuse (11) angeordnet ist.

## Claims

1. A heating clip (1) for a fluid conduit (24), which comprises a heating element (2) disposed in a housing (3, 103) and a clamping element by means of which the heating clip may be clamped to the fluid conduit (24) in operation, and a heat sink (4, 104) which is mounted on the housing (3, 103), and which in the operating state is wrapped round the fluid conduit (24) and is disposed so as to transfer heat between the heating element (2) and the fluid conduit (24), **characterised in that** the heating element (2) is inserted into a sealed shaft (15) formed in the housing (3, 13) and is biased in the shaft.

2. The heating clip (1) according to Claim 1, **characterised in that** the heat sink (4, 104) is formed so as to wrap around more than about half the circumference of the fluid conduit (24).

3. The heating clip (1) according to one of the preceding claims, **characterised in that** the heat sink (4, 104) is engaged with positive locking with the housing (3, 103).

4. The heating clip (1) according to one of the preceding claims, **characterised in that** the heat-conducting capacity of the heat sink (4, 104) is greater than about 25 W/mK.

5. The heating clip (1) according to one of the preceding claims, **characterised in that** the heat sink (4, 104) is manufactured from aluminium.

6. The heating clip (1) according to one of the preceding claims, **characterised in that** the heat sink is formed in one piece (4) or in two parts (104).

7. The heating clip (1) according to one of the preceding claims, **characterised in that** the heating element (2) comprises a PTC heating element.

8. The heating clip (1) according to Claim 7, **characterised in that** the heating element comprises two contact element (5, 7), one of the contact elements (5, 7) being formed as a spring element, and the PTC element (6) being disposed between the contact elements (5, 7).

9. The heating clip (1) according to Claim 8, **characterised in that** a stop is provided on which the spring element bears in a biased manner.

10. The heating clip (1) according to one of the preceding claims, **characterised in that** the heating element (2) comprises a resistance wire heating element.

11. The heating clip (1) according to one of the preceding claims, **characterised in that** in the shaft (15) at least one guide web (16) is disposed which extends at least in the insertion direction E of the heating element (2) and through which the heating element (1) is guided when being inserted.

12. The heating clip (1) according to one of the preceding claims, **characterised in that** the shaft (15) tapers in a wedge-shaped manner in the direction of insertion E of the heating element (2).

13. The heating clip (1) according to one of the preceding claims, **characterised in that** the housing (3, 103) is manufactured from an electrically insulating material, preferably a plastics material.

14. The heating clip (1) according to one of the preceding claims, **characterised in that** the heating clip (1) comprises a fastening bow (25) with which the heating clip (1) is formed so as to enclose substantially the entire circumference of the fluid conduit (24).

15. The heating clip (1) according to Claim 14, **characterised in that** the fastening bow (25) and the housing (3) are pre-assembled as one part.

16. The heating clip (1) according to Claim 14 or 15, **characterised in that** the housing (3) and the fastening bow (25) are formed as a linked injection-moulded part.

17. The heating clip (1) according to one of Claims 14 to 16, **characterised in that** the fastening bow (25) and the housing (3) are connected together in such a manner that they cannot be lost.

18. The heating clip (1) according to any of Claims 14 to 17, **characterised in that** the fastening bow (25) and the housing (3) together form a swivel bearing.

19. The heating clip (1) according to one of Claims 14 to 18, **characterised in that** the fastening bow (25) and the housing (3) are engaged together with positive locking.

20. The heating clip (1) according to one of Claims 14 to 19, **characterised in that** the fastening bow (25) and the housing (3) are engaged together so as to be releasable repeatedly.

21. The heating clip (1) according to one of Claims 14 to 20, **characterised in that** the fastening bow (25) and/or the housing (3) have at least one stop (27) in the longitudinal direction L of the fluid conduit (24).

22. The heating clip (1) according to one of the preceding claims, **characterised in that** the heating clip (1) comprises a plug housing (11), which together with the heating element (2) forms an electrical plug connector, by means of which the heating clip (1) may be connected to a power supply.

23. The heating clip (1) according to Claim 22, **characterised in that** the plug housing (11) is engaged with positive locking with the housing 3, 103).

24. The heating clip (1) according to Claim 22 or 23, **characterised in that** the heating element (2) is mounted on the plug housing (11).

25. The heating clip (1) according to one of Claims 22 to 24, **characterised in that** the heating clip (1) comprises a seal (19") which is disposed between the housing (3) and the plug housing (11).

## Revendications

1. Clip de chauffage (1) pour une conduite de fluide (24), lequel comporte un élément chauffant (2), disposé dans un boîtier (3, 103), et un élément de serrage par lequel le clip de chauffage peut être bloqué en cours de service sur la conduite de fluide (24), et un dissipateur thermique (4, 104), qui est attaché au boîtier (3, 103) et qui, dans la position de service, entoure la conduite de fluide (24) et est disposé de manière à transmettre la chaleur entre l'élément chauffant (2) et la conduite de fluide (24), **caractérisé en ce que** l'élément chauffant (2) est inséré dans une cage (15) étanchée, réalisée dans le boîtier (3, 103), et est précontraint dans ladite cage.

2. Clip de chauffage (1) selon la revendication 1, **caractérisé en ce que** le dissipateur thermique (4, 104) est réalisé pour entourer plus de la moitié de la périphérie de la conduite de fluide (24).

3. Clip de chauffage (1) selon l'une quelconque des revendications précédentes, **caractérisé en ce que** le dissipateur thermique (4, 104) est assemblé par conjugaison de forme avec le boîtier (3, 103).

4. Clip de chauffage (1) selon l'une quelconque des revendications précédentes, **caractérisé en ce que** la conductibilité thermique du dissipateur thermique (4, 104) est supérieure à 25 W/mK environ.

5. Clip de chauffage (1) selon l'une quelconque des revendications précédentes, **caractérisé en ce que** le dissipateur thermique (4, 104) est réalisé en aluminium.

6. Clip de chauffage (1) selon l'une quelconque des revendications précédentes, **caractérisé en ce que** le dissipateur thermique est réalisé en une seule partie (4) ou en deux parties (104).

7. Clip de chauffage (1) selon l'une quelconque des revendications précédentes, **caractérisé en ce que** l'élément chauffant (2) comporte un élément chauffant PTC.

8. Clip de chauffage (1) selon la revendication 7, **caractérisé en ce que** l'élément chauffant comporte deux éléments de contact (5, 7), l'un des éléments de contact (5, 7) étant conçu sous la forme d'un élément à ressort, et l'élément PTC (6) étant disposé entre les éléments de contact (5, 7).

9. Clip de chauffage (1) selon la revendication 8, **caractérisé en ce qu'**il est prévu une butée, contre laquelle l'élément de ressort prend appui de manière précontrainte.

10. Clip de chauffage (1) selon l'une quelconque des revendications précédentes, **caractérisé en ce que** l'élément chauffant (2) comporte un élément chauffant avec un fil de résistance.

11. Clip de chauffage (1) selon l'une quelconque des revendications précédentes, **caractérisé en ce que** dans la cage (15) est disposée au moins une nervure de guidage (16), qui s'étend dans la direction d'enfichage E de l'élément chauffant (2) et par laquelle l'élément chauffant (2) est guidé pendant son enfichage.

12. Clip de chauffage (1) selon l'une quelconque des revendications précédentes, **caractérisé en ce que** la cage (15) se rétrécit en forme de clavette dans la direction d'enfichage E de l'élément chauffant (2).

13. Clip de chauffage (1) selon l'une quelconque des revendications précédentes, **caractérisé en ce que** le boîtier (3, 103) est réalisé dans un matériau électro-isolant, de préférence une matière plastique.

14. Clip de chauffage (1) selon l'une quelconque des revendications précédentes, **caractérisé en ce que** le clip de chauffage (1) comporte un étrier de fermeture (25), avec lequel le clip de chauffage (1) est réalisé de manière à entourer sensiblement toute la périphérie de la conduite de fluide (24).

15. Clip de chauffage (1) selon la revendication 14, **caractérisé en ce que** l'étrier de fermeture (25) et le boîtier (3) sont préfabriqués pour former une seule pièce.

16. Clip de chauffage (1) selon la revendication 14 ou 15, **caractérisé en ce que** le boîtier (3) et l'étrier de fermeture (25) sont réalisés sous la forme d'une pièce moulée par injection d'un seul tenant.

17. Clip de chauffage (1) selon l'une quelconque des revendications 14 à 16, **caractérisé en ce que** l'étrier de fermeture (25) et le boîtier (3) sont reliés l'un à l'autre de manière imperdable.

18. Clip de chauffage (1) selon l'une quelconque des revendications 14 à 17, **caractérisé en ce que** l'étrier de fermeture (25) et le boîtier (3) forment conjointement un palier pivotant.

19. Clip de chauffage (1) selon l'une quelconque des revendications 14 à 18, **caractérisé en ce que** l'étrier de fermeture (25) et le boîtier (3) sont assemblés l'un à l'autre par conjugaison de forme.

20. Clip de chauffage (1) selon l'une quelconque des revendications 14 à 19, **caractérisé en ce que** l'étrier de fermeture (25) et le boîtier (3) sont attachés l'un à l'autre de manière amovible à plusieurs reprises.

21. Clip de chauffage (1) selon l'une quelconque des revendications 14 à 20, **caractérisé en ce que** l'étrier de fermeture (25) et/ou le boîtier (3) comportent au moins une butée (27) dans la direction longitudinale L de la conduite de fluide (24).

22. Clip de chauffage (1) selon l'une quelconque des revendications précédentes, **caractérisé en ce que** le clip de chauffage (1) comporte un boîtier à fiches (11) qui, conjointement avec l'élément chauffant (2), forme un connecteur électrique, par lequel le clip de chauffage (1) est réalisé de manière à pouvoir être raccordé à une source d'énergie.

23. Clip de chauffage (1) selon la revendication 22, **caractérisé en ce que** le boîtier à fiches (11) est assemblé par conjugaison de forme avec le boîtier (3, 103).

24. Clip de chauffage (1) selon la revendication 22 ou 23, **caractérisé en ce que** l'élément chauffant (2) est disposé sur le boîtier à fiches (11).

25. Clip de chauffage (1) selon l'une quelconque des revendications 22 à 24, **caractérisé en ce que** le clip de chauffage (1) comporte un joint d'étanchéité (19"), qui est disposé entre le boîtier (3) et le boîtier à fiches (11).
